# EUROPÄISCHE PATENTANMELDUNG

(11) **EP 2 295 183 A2**
(43) Veröffentlichungstag der Anmeldung: **16.03.2011**
(21) Anmeldenummer: 10176001.5
(22) Anmeldetag: 09.09.2010
(51) Int. Cl.: B23K 1/00, B23P 15/26

(54) **Verfahren zur Herstellung von Solarkollektoren**

(30) Priorität: 11.09.2009 DE 102009043986
(71) Anmelder: Hydro Aluminium Deutschland GmbH, 53117 Bonn (DE)
(72) Erfinder: Denkmann, Volker, 47906 Kempen (DE); Schenkel, Willi, 41515 Grevenbroich (DE); Siemen, Andreas, 41363 Jüchen (DE); Hampel, Ulrich, 41516 Grevenbroich (DE)
(74) Vertreter: Cohausz & Florack

(57) **Zusammenfassung**

Die Erfindung betrifft ein Verfahren zur Herstellung von Solarkollektoren. Die Aufgabe, ein Verfahren zur Herstellung von Solarkollektoren vorzuschlagen, welches eine sehr wirtschaftliche Herstellung von effizienten Solarkollektoren ermöglicht, wird gemäß der Lehre der vorliegenden Erfindung durch ein Verfahren mit den Arbeitsschritten gelöst:
- ein erstes Band aus Aluminium oder einer Aluminiumlegierung wird bereitgestellt,
- das erste Band wird auf der oberen Seite mit einer selektiv elektromagnetische Strahlung im Nahinfrarot-Bereich absorbierenden, hochtemperaturfesten Beschichtung beschichtet,
- ein zweites Band aus Aluminium oder einer Aluminiumlegierung wird bereitgestellt,
- in das zweite Band werden unter Verwendung einer Presse Medien führende Kanäle tiefgezogen,
- das zweite Band wird in Unterbleche abgetafelt,
- zwischen dem ersten Band und dem Unterblech wird eine Lotschicht bereitgestellt,
- das erste Band und das Unterblech werden zusammengeführt und aneinander gepresst,
- das erste Band und das Unterblech werden unter Verwendung von elektromagnetischer Strahlung im Nahinfrarot-Bereich in einem Durchlaufofen gelötet.

## Beschreibung

Die Erfindung betrifft ein Verfahren zur Herstellung von Solarkollektoren.

In Bezug auf die Nutzung von regenerativen Energiequellen spielen Solarkollektoren eine zunehmend wichtige Rolle. Sie wandeln die Strahlungsenergie der Sonne in thermische Energie um, indem in den Solarkollektoren fließendes Wärmemedium stark erwärmt wird. Solarkollektoren werden in unterschiedlichen Formen verwendet. Häufig werden sogenannte Flachkollektoren verwendet, welche im Gegensatz zu Röhrenkollektoren ein Absorberblech aufweisen, welches mit Kupferrohren in Kontakt steht. Diese Anordnung ist über ein Isoliermaterial, beispielsweise Mineralwolle, isoliert. Das Absorberblech hat die Aufgabe, möglichst viel Sonnenlicht zu absorbieren und ist in der Regel mit einer selektiv die durch das Blech wieder abgestrahlte Wärmestrahlung absorbierenden Beschichtung versehen. Hierdurch wird der Wirkungsgrad des Absorberblechs deutlich erhöht. Die mit dem Absorberblech in gutem Wärmekontakt stehenden Kupfer- oder Aluminiumrohre sind auf das Absorberblech aufgeschweißt, geklebt oder gelötet. Der Aufwand zur Herstellung der Flachkollektoren ist relativ hoch, denn es müssen zunächst Rohre gebogen werden und mit dem Absorberblech verschweißt werden. Um hier Abhilfe zu schaffen ist aus der deutschen Offenlegungsschrift DE 10 2006 003 096 bekannt, den Flachkollektor aus zwei Aluminiumblechen herzustellen, von denen eines tiefgezogene Vertiefungen aufweist, die Kanäle für ein Wärmeleitmedium bilden. Darüber hinaus wurde in der genannten Offenlegungsschrift vorgeschlagen, die Solarkollektoren bandweise d.h. kontinuierlich herzustellen. Allerdings war dies bisher nur eingeschränkt möglich, da der Lötvorgang der beteiligten Aluminiumbleche ca. 15 bis 30 Min. beanspruchte, so dass für eine bandweise Verarbeitung große Lötstraßen notwendig wären. Bis dato war deshalb eine kontinuierliche Herstellung solcher Solarkollektoren nicht möglich.

Hiervon ausgehend liegt der vorliegenden Erfindung die Aufgabe zugrunde, ein Verfahren zur Herstellung von Solarkollektoren vorzuschlagen, welches eine sehr wirtschaftliche Herstellung von effizienten Solarkollektoren ermöglicht.

Die genannte Aufgabe wird gemäß der Lehre der vorliegenden Erfindung durch ein Verfahren mit den Arbeitsschritten gelöst:
- ein erstes Band aus Aluminium oder einer Aluminiumlegierung wird bereitgestellt,
- das erste Band wird auf der oberen Seite mit einer selektiv elektromagnetische Strahlung im Nahinfrarot-Bereich absorbierenden, hochtemperaturfesten Beschichtung beschichtet,
- ein zweites Band aus Aluminium oder einer Aluminiumlegierung wird bereitgestellt,
- in das zweite Band werden unter Verwendung einer Presse Medien führende Kanäle tiefgezogen,
- das zweite Band wird in Unterbleche abgetafelt,
- zwischen dem ersten Band und dem Unterblech wird eine Lotschicht bereitgestellt,
- das erste Band und das Unterblech werden zusammengeführt und aneinander gepresst,
- das erste Band und das Unterblech werden unter Verwendung von elektromagnetischer Strahlung im Nahinfrarot-Bereich in einem Durchlaufofen gelötet.

Es hat sich herausgestellt, dass durch die Verwendung einer hochtemperaturfesten Beschichtung, welche im Nahinfrarot-Bereich selektiv elektromagnetische Strahlung absorbiert, ein extrem kurzer Lötvorgang ermöglicht wird. Die Zykluszeiten für das Löten wurden von 15 bis 30 Minuten auf etwa 5 bis 15 Sekunden verkürzt. Dies ermöglicht die bandweise d.h. kontinuierliche Herstellung von Solarkollektoren, wie sie erfindungsgemäß vorgeschlagen wird, mit entsprechend kurzen Taktzeiten und einer hohen Ausbringung an Solarkollektoren. Die bandweise Verarbeitung endet beispielsweise erst nach dem Lötprozess, nach welchem die Solarkollektoren vereinzelt werden. Aufgrund der hohen Wärmeleitfähigkeit von Aluminium, der aufgebrachten Beschichtung sowie der eingeprägten Medien führenden Kanäle steht am Ende des Herstellungsprozesses ein sehr effizienter Solarkollektor zur Verfügung. Die Nutzung eines Lötvorganges, welcher die notwendige Wärmeenergie durch elektromagnetische Strahlung im Nahinfrarot-Bereich bereitstellt, in Kombination mit der gerade diese Strahlung hoch absorbierende Beschichtung führt zu den extrem kurzen Löt- bzw. Taktzeiten zur Herstellung der Solarkollektoren.

Elektromagnetische Strahlung im Nachinfrarot-Bereich hat eine Wellenlänge von etwa 700 nm bis 1800 nm. Die effiziente Erwärmung der Aluminiumbleche bzw. des Aluminiumbandes resultiert aus der Absorption von Photonen der elektromagnetischen Strahlung im Nahinfrarot-Bereich und deren relativ hoher Energie.

Eine einfache Bereitstellung der Lotschicht zwischen dem ersten Band und dem Unterblech wird gemäß einer ersten Ausgestaltung des erfindungsgemäßen Verfahrens dadurch erreicht, dass das erste Band auf der dem Unterblech zugewandten Seite und/oder das Unterblech auf der dem ersten Band zugewandten Seite mit einer Lotschicht plattiert oder mit Lot- und/oder Flussmitteln beschichtetet sind. Eine plattierte Lotschicht stellt eine vergleichsweise homogene Aluminiumlotschicht in allen zu lötenden Bereichen gleichermaßen zur Verfügung. Das gleiche gilt auch für Lot- und/oder Flussmittel beschichtete Aluminiumbänder oder - bleche.

Alternativ dazu kann gemäß einer nächsten Ausgestaltung des erfindungsgemäßen Verfahrens die Lotschicht auch durch eine Lötfolie bereitgestellt werden. Die Lötfolie wird hierzu beispielsweise beim Zusammenführen des ersten Bandes mit dem Unterblech zugeführt.

Gemäß einer weiteren Ausgestaltung des erfindungsgemäßen Verfahrens wird das zweite Band vor dem Tiefziehen der Medien führenden Kanäle in Unterbleche abgetafelt. Anschließend werden die Unterbleche tiefgezogen. Das Tiefziehwerkzeug kann in diesem Fall einfacher aufgebaut sein.

Zur Verbesserung des Lötergebnisses wird gemäß einer nächsten Ausführungsform des erfindungsgemäßen Verfahrens das Unterblech nach dem Tiefziehen der Medien führenden Kanäle mit einem Flussmittel beaufschlagt. Alternativ ist aber auch denkbar, das erste Band auf der dem Unterblech zugewandten Seite mit einem Flussmittel zu beaufschlagen.

Zur Verringerung der Taktzeiten zur Herstellung des Solarkollektors und gleichzeitig zur Verringerung der Herstellkosten wird gemäß einer weiteren Ausführungsform des erfindungsgemäßen Verfahrens vorgeschlagen, dass die Verfahrensschritte Tiefziehen und Abtafeln der Unterbleche, das Zusammenführen des ersten, auf der oberen Seite beschichteten Bandes mit dem Unterblech und das Löten des ersten Bandes und des Unterblechs in einer Verarbeitungsvorrichtung inline durchgeführt werden. In diesem Fall kann beispielsweise das Beschichten des ersten Bandes mit einer selektiv im Nahinfrarot-Bereich elektromagnetische Strahlung absorbierenden Beschichtung getrennt von dem Zusammenführen und Löten der beteiligten Aluminiumbleche oder Aluminiumleierungsbleche erfolgen.

Während des Lötvorganges werden das erste Band und das Unterblech zur Erzeugung des Lötspaltes gegeneinander gepresst. Dies geschieht gemäß einer weiteren Ausführungsform des erfindungsgemäßen Verfahrens vorzugsweise dadurch, dass während des Lötens das erste Band und das Unterblech unter Verwendung eines Druckbandes, vorzugsweise unter Verwendung eines strukturierten Druckbandes zusammengedrückt durch den Durchlaufofen transportiert werden. Die Verwendung eines Druckbandes stellt eine einfache Möglichkeit dar, im Durchlaufofen den Lötspalt zu erzeugen und gleichzeitig den Transport des Lötgutes sicherzustellen, so dass eine hoch qualitative Lötverbindung hergestellt werden kann. Das strukturierte Druckband berücksichtigt vorzugsweise im Ober- oder Unterblech vorhandene Strukturen, um gleichmäßig Druck auf die Blechoberfläche zu erzeugen.

Werden in das Unterblech mäanderförmige und/oder fraktale Strukturen aufweisende Vertiefungen tiefgezogen, kann ein maximaler Wärmeaustausch zwischen dem Absorberblech, welches durch das erste Band gebildet wird und dem Wärmeleitmedium gewährleistet werden. Die Effizienz der Solarkollektoren kann durch fraktale Strukturen, welche turbulente Strömungen in den Medienkanälen erzeugen weiter gesteigert werden.

Vorzugsweise wird ein Controlled Atmosphere Brazing (CAB) bzw. Schutzgaslötverfahren durchgeführt. In diesem Fall kann beispielsweise ein Druckband zur Bereitstellung des Lötspaltes zwischen den beteiligten Lötpartnern verwendet werden.

Alternativ wird gemäß einer nächsten Ausführungsform des erfindungsgemäßen Verfahrens das erste Band vor dem Zusammenführen mit dem Unterblech in Oberbleche abgetafelt. Zum Löten werden die Oberbleche mit den Unterblechen in Deckung gebracht. Diese Alternative Verfahrensweise ermöglicht gleichzeitig die Anwendung unterschiedlicher Lötverfahren.

Vorzugsweise wird alternativ zur Verwendung des Druckbandes ein Ober- und ein Unterblech in evakuierbaren Lötlehren angeordnet und ein Vakuumlöten durchgeführt. Hierdurch kann die Entstehung von Oxidationen auf den beteiligten Lötpartnern minimiert werden und ein optimiertes Lötergebnis erzielt werden. Lötlehren können aber auch alternativ für ein Schutzgaslöten verwendet werden.

Schließlich kann gemäß einer weiteren Ausführungsform des erfindungsgemäßen Verfahrens alternativ zum Druckband eine durch den Durchlaufofen bewegbare Druckplatte verwendet werden. Diese Druckplatte sorgt aufgrund ihres Gewichts für die Erzeugung des entsprechenden Lötspaltes und kann beispielsweise auch beim Vakuumlöten in den evakuierbaren Lötlehren eingesetzt werden.

Es gibt nun eine Vielzahl von Möglichkeiten das erfindungsgemäße Verfahren auszugestalten und weiterzubilden. Hierzu wird verwiesen auf die dem Patentanspruch 1 nachgeordneten Patentansprüche sowie auf die Beschreibung von Ausführungsbeispielen in Verbindung mit der Zeichnung. Die Zeichnung zeigt in
- Fig. 1: in einer schematischen Darstellung einen ersten Verfahrensschritt zum Beschichten des ersten Bandes,
- Fig. 2: in einer schematischen Darstellung ein erstes Ausführungsbeispiel des erfindungsgemäßen Verfahrens unter Verwendung eines beschichteten Aluminiumbandes und
- Fig. 3: ein zweites Ausführungsbeispiel eines erfindungsgemäßen Verfahrens, bei welchem ein Ober- und Unterblech miteinander verlötet werden.

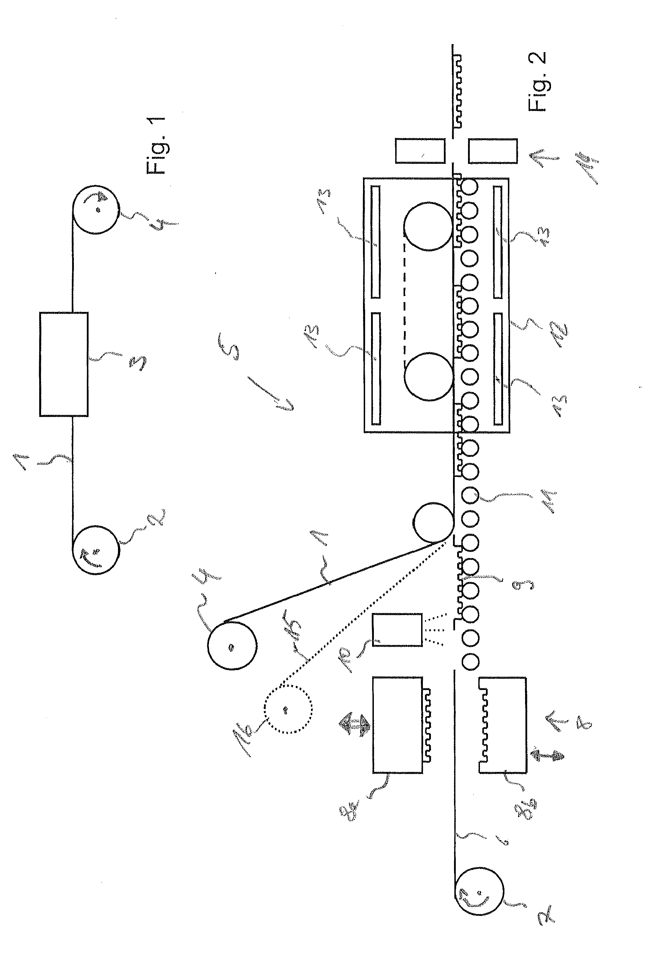

Figur 1 zeigt zunächst in einer schematischen Darstellung die Beschichtung eines ersten Bandes aus Aluminium oder einer Aluminiumlegierung 1 mit einer selektiven, im Nahinfrarot-Bereich absorbierenden und hochtemperaturfesten Beschichtung. Die Beschichtung selbst ist im vorliegenden Ausführungsbeispiel nicht dargestellt. Zum Beschichten wird das auf einem Coil 2 aufgewickelte Aluminiumband 1 abgewickelt und einer Beschichtungsvorrichtung 3 zugeführt. Die Beschichtungsvorrichtung 3 beschichtet das Aluminiumband 1 nach dem Coil-Coating oder Curtain-Coating Verfahren. Darüber hinaus sind auch andere Verfahren wie beispielsweise das Bedampfen oder das galvanische Aufbringen der Beschichtung denkbar. Anschließend wird das Aluminiumband 1 auf ein Coil 4 aufgewickelt.

Das Coil 4 wird einer Vorrichtung 5 zugeführt, welche folgende Schritte inline durchführt. Zunächst wird ein zweites Aluminiumband 6 durch ein Coil 7 bereitgestellt und einer Tiefziehpresse 8 mit jeweils zwei Gesenkhälften 8a und 8b zugeführt. Die Tiefziehpresse 8 formt in das Aluminiumband 6 bzw. Aluminiumlegierungsband 6 die für die Medienführung notwendigen, beispielsweise mäanderförmige Kanäle in das Unterblech 9 ein. Die tiefgezogenen Unterbleche 9 werden vorzugsweise mit einem Flussmittel unter Verwendung der Vorrichtung 10 besprüht. Dabei werden die Unterbleche 9 auf einem Rollenband 11 geführt. Das auf dem Coil 4 aufgewickelte erste Band mit einer äußeren, selektiven im Nahinfrarot-Bereich hoch absorbierenden Beschichtung versehene Aluminiumband 1 wird beispielsweise über eine Umlenkrolle 12 an das Unterblech 9 herangeführt. Vorzugsweise weist das Aluminium- oder Aluminiumlegierungsband 1 und/oder das Unterblech 9 auf den sich gegenüberliegenden Seiten eine Lotplattierung auf, um anschließend beim Zusammenführen des Aluminiumlegierungsbandes 1 und des Unterblechs 9 eine ausreichende Aluminiumlotschicht zwischen dem ersten Band 1 und dem Unterblech 9 bereitzustellen. Alternativ zur Lotplattierung kann aber auch eine Beschichtung aus Lot- und/oder Flussmitteln verwendet werden. Das Band 1 mit dem unterhalb des Bandes angeordneten Unterblech 9 wird in einen Ofen 12 transportiert, welcher Nahinfrarot-Strahlungsquellen 13 aufweist. Vor allem aufgrund der hochselektiv absorbierenden Beschichtung des ersten Aluminiumbandes 1 erfährt die Anordnung von erstem Band 1 und Unterblech 9 eine extrem schnelle Erwärmung, so dass der Lötvorgang nach 5 bis 15 Sekunden abgeschlossen ist. Am Ausgang des Ofens 12 ist eine Abtafelvorrichtung 14 vorgesehen, welche die einzelnen Solarkollektoren aus dem Band 1 heraustrennt. Aufgrund der extrem kurzen Lötzeit, ist eine besonders wirtschaftliche Herstellung mit hohen Herstellraten mit dem erfindungsgemäßen Verfahren möglich. Alternativ zur Verwendung von lotplattierten Aluminiumbändern 1 und 6 besteht die Möglichkeit, eine Lötfolie 15, welche durch ein Coil 16 bereitgestellt wird in den Zwischenraum zwischen erstem Band und Unterblech anzuordnen. Beim Löten wird diese Lötfolie aufgeschmolzen und bildet die Lötverbindung aus.

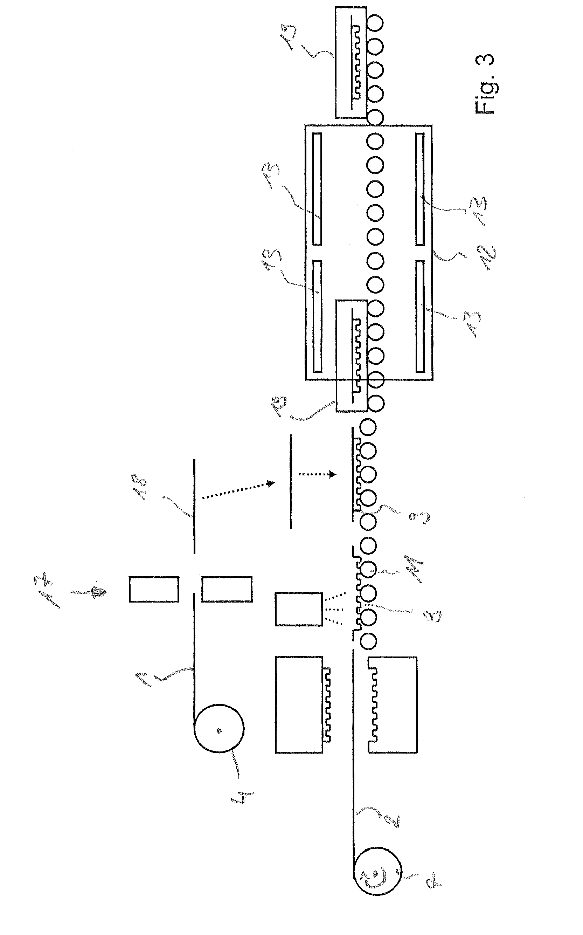

Alternativ hierzu kann das auf der Oberseite beschichtete Aluminiumband 1 von einem Coil 4 abgewickelt und über eine Abtafelvorrichtung 17 in Oberbleche 18 abgetafelt werden. Dies zeigt Figur 3 in einer schematischen Ansicht. Das abgetafelte Oberblech 18 wird dann dem bereits tiefgezogenen Unterblech 9 zugeführt, welches auf Transportrollen 11 geführt wird. Beide Bleche 9, 18 werden dann in Lötlehren 19 angeordnet, welche evakuierbar sind. Die evakuierbaren Lötlehren 19 werden dann dem NIR-Ofen auf Transportrollen 11 zugeführt, wobei aufgrund der Strahlungsenergie der Nahinfrarot-Strahlungsquellen 13 das Ober- und das Unterblech sehr schnell auf Löttemperatur erhitzt werden. Anschließend muss der fertige Solarkollektor noch aus der Lötlehre 19 entnommen werden.

Beide alternative Verfahren, die in Figur 2 und Figur 3 dargestellt sind, zeichnen sich durch eine besonders hohe Effizienz aus und ermöglichen es Solarkollektoren in hoher Stückzahl kostengünstig herzustellen.

## Patentansprüche

1. Verfahren zur Herstellung von Solarkollektoren mit folgenden Schritten:
- ein erstes Band aus Aluminium oder einer Aluminiumlegierung wird bereitgestellt,
- das erste Band wird auf der oberen Seite mit einer selektiv elektromagnetische Strahlung im Nahinfrarot-Bereich absorbierenden, hochtemperaturfesten Beschichtung beschichtet,
- ein zweites Band aus Aluminium oder einer Aluminiumlegierung wird bereitgestellt,
- in das zweite Band werden unter Verwendung einer Presse Medien führende Kanäle tiefgezogen,
- das zweite Band wird in Unterbleche abgetafelt,
- zwischen dem ersten Band und dem Unterblech wird eine Lotschicht bereitgestellt,
- das erste Band und das Unterblech werden zusammengeführt und aneinander gepresst,
- das erste Band und das Unterblech werden unter Verwendung von elektromagnetischer Strahlung im Nahinfrarot-Bereich in einem Durchlaufofen gelötet und anschließend zu Solarkollektoren vereinzelt.

2. Verfahren nach Anspruch 1,
**dadurch gekennzeichnet, dass**
das erste Band auf der dem Unterblech zugewandten Seite und/oder das Unterblech auf der dem ersten Band zugewandten Seite mit einer Lotschicht plattiert oder mit Lot- und/oder Flussmitteln beschichtetet sind.

3. Verfahren nach Anspruch 1 oder 2,
**dadurch gekennzeichnet, dass**
die Lotschicht durch eine Lötfolie bereitgestellt wird.

4. Verfahren nach einem der Ansprüche 1 bis 3,
**dadurch gekennzeichnet, dass**
das zweite Band vor dem Tiefziehen der Medien führenden Kanäle in Unterbleche abgetafelt wird und die Unterbleche tiefgezogen werden.

5. Verfahren nach einem der Ansprüche 1 bis 4,
**dadurch gekennzeichnet, dass**
das Unterblech nach dem Tiefziehen der Medien führenden Kanäle mit einem Flussmittel beaufschlagt wird.

6. Verfahren nach einem der Ansprüche 1 bis 5,
**dadurch gekennzeichnet, dass**
die Verfahrensschritte Tiefziehen und Abtafeln der Unterbleche, das Zusammenführen des ersten, auf der oberen Seite beschichteten Bandes mit dem Unterblech und das Löten des ersten Bandes und des Unterblechs in einer Verarbeitungsvorrichtung inline durchgeführt werden.

7. Verfahren nach einem der Ansprüche 1 bis 6,
**dadurch gekennzeichnet, dass**
während des Lötens das erste Band und das Unterblech unter Verwendung eines Druckbandes, vorzugsweise unter Verwendung eines strukturierten Druckbandes zusammengedrückt durch den Durchlaufofen transportiert werden.

8. Verfahren nach einem der Ansprüche 1 bis 7,
**dadurch gekennzeichnet, dass**
in das Unterblech mäanderförmige und/oder fraktale Strukturen aufweisende Vertiefungen tiefgezogen werden.

9. Verfahren nach einem der Ansprüche 1 bis 8,
**dadurch gekennzeichnet, dass**
ein Schutzgas(CAB)-Lötverfahren durchgeführt wird.

10. Verfahren nach einem der Ansprüche 1 bis 9,
**dadurch gekennzeichnet, dass**
alternativ das erste Band vor dem Zusammenführen mit dem Unterblech in Oberbleche abgetafelt wird und die Oberbleche mit den Unterblechen zum Löten in Deckung gebracht werden.

11. Verfahren nach Anspruch 10,
**dadurch gekennzeichnet, dass**
alternativ zur Verwendung des Druckbandes ein Ober- und ein Unterblech in evakuierbaren Lötlehren angeordnet werden und ein Vakuumlöten oder ein Schutzgas(CAB)-Lötverfahren durchgeführt wird.

12. Verfahren nach einem der Ansprüche 1 bis 11,
**dadurch gekennzeichnet, dass**
alternativ zum Druckband eine durch den Durchlaufofen bewegbare Druckplatte verwendet wird.
